# EUROPEAN PATENT SPECIFICATION

(11) **EP 4 044 877 B1**
(45) Date of publication and mention of the grant of the patent: **26.07.2023**
(21) Application number: 20788899.1
(22) Date of filing: 01.10.2020
(51) Int. Cl.: A47J 31/60, A47J 31/46, A47J 31/18, A47J 31/00

(54) **INFUSION MODULE AND COFFEE MACHINE PROVIDED WITH SAID INFUSION MODULE**
INFUSIONSMODUL UND KAFFEEMASCHINE MIT DIESEM INFUSIONSMODUL
MODULE D'INFUSION ET MACHINE À CAFÉ FOURNIS AVEC LEDIT MODULE D'INFUSION

(30) Priority: 17.10.2019 IT 201900019211
(43) Date of publication of application: 24.08.2022
(73) Proprietor: Rancilio Group S.p.A., 20015 Parabiago (MI) (IT)
(72) Inventor: BECK, Pascal, 20015 Parabiago (MI) (IT); HÄFLIGER, Pascal, 20015 Parabiago (MI) (IT)
(74) Representative: Robba, Pierpaolo
(86) International application number: PCT/IB2020/059207
(87) International publication number: WO 2021/074733

(56) References cited:
- WO-A1-2017/189628
- WO-A2-2008/020135
- IT-A1- BO20 090 410
- US-A1- 2019 090 503

## Description

### Technical Field

The present invention relates to an infusion module for producing infused beverages.

The present invention also relates to a coffee machine provided with such an infusion module.

More particularly, the present invention relates to a fully automatic coffee machine (also called "coffee automat") provided with such an infusion module.

### Background Art

Fully automatically functioning coffee machines, also called coffee automats, allow to obtain a coffee-based beverage in a completely automatic way, without the intervention of any operator, and for this reason they are in particular employed in the catering business.

These machines includes an outer casing housing all the functional groups necessary for the automatic preparation of a coffee based beverage, among which a drinking water supply, one or more boilers, a pump for feeding drinking water to the boiler(s) for the supply of hot water and possibly steam, one or more brewing groups as well as means, such as pipes and valves, for conveying the drinking water to a boiler, the heated water from the boiler to a brewing group and the beverage from the brewing group to an outlet spout.

The outer casing also contains an electronic control unit including a memory in which the recipes of the beverages that can be prepared by the coffee machine are stored, and is provided with a user interface for allowing a user to select the desired beverage.

As a result, upon selection of a beverage (for instance by pushing a button), the selected beverage is prepared in a fully automatic way, without any need of intervention of a skilled operator.

Such fully automatic coffee machines can be supplied either with coffee powder or with coffee beans. In this latter case, the outer casing also includes a coffee bean container and one or more grinding units, so that coffee powder is prepared from coffee beans only upon selection of a coffee-based beverage from a user, i.e. immediately before its use in a brewing group.

The coffee powder is conveyed to a brewing group, where it is compressed into a coffee cake. Heated water is forced to flow through the coffee cake and the resulting beverage is supplied to a cup or similar container.

As mentioned before, fully automatic coffee machines are in particular employed in the catering business, and they can be installed in hotels, canteens, workplaces.

Also in view of these preferred applications, there is a need for fully automatic coffee machines which are highly versatile, so as to meet the tastes of several different consumers.

More particularly, there is a need for fully automatic coffee machines which are capable of preparing also different kind of beverages such as tea or similar infusions.

To this purpose, fully automatic machines which are capable of preparing tea-based beverages - in addition or as an alternative to coffee-based beverages - have been developed.

Such fully automatic machines for preparing coffee- and/or tea-based beverages are disclosed, for instance, in documents US 5 265 518, GB 835 285 and GB 2 234 151.

However, these known machines suffer severe drawbacks.

These machines work on the same principle as the above-described coffee machines. Therefore, a flow of heated water passes through the tea and the resulting beverage is supplied to a cup or similar container.

However, this process of letting a flow of hot water pass through the tea can hardly replicate the infusion process usually employed for obtaining tea-based beverages.

In order to allow water to extract flavor from tea as it simply flows through it, tea has to be supplied in the form of powder or finely ground leaves. This results in a poor quality of the obtained beverage.

Moreover, either the tea is provided from the beginning to the fully automatic machine in the form of powder or finely ground leaves or the machine has to include a device for grinding or crushing the tea leaves.

In the former case, the quality of the resulting beverage is further deteriorated. In the latter case, room for the grinding / crushing device has to be provided in the casing of the fully automatic machine, which increases the overall size of the machine itself. International patent application WO 2008/020135 discloses a method for preparing a hot or cold drink by brewing in water a product such as tea leaves for example, comprising a step of heating the water to a given temperature, then a step of mixing the leaves with the hot water, and finally a step of removing the brewed leaves, comprising at least one step of immersing at least one item obtained from a porous material during the brewing; determining the temperature to which a predetermined volume of water is to be heated; and determining the leaf brewing time in said volume of heated water; said brewing time in said volume of water being determined on the basis of the properties of the beverages prepared with said leaves, the information relating to said leaves being recorded in a memory unit. WO 2008/020135 further discloses a device for implementing the aforesaid method. Italian patent application IT BO2009A000410 discloses a method for the preparation of an infused beverage in a beverage production apparatus equipped with a boiler for the supply of steam and hot water, which method comprises the steps of: introducing a dose of substance for the preparation of the infused beverage inside an infusion container; introducing a predetermined quantity of hot water into the infusion container; keeping the water, together with said substance, in the container until the preparation of the drink is completed, with the simultaneous introduction of steam inside the drink; dispensing the drink from the container. IT BO2009A000410 further discloses a device for implementing the aforesaid method.

The main object of the present invention is to obviate to the aforesaid drawbacks, by providing an infusion module according to claim 1 and a fully automatic coffee machine which are capable of dispensing infused beverages of high quality.

A further object of the present invention is to provide the possibility for a fully automatic machine of dispensing infused beverages of high quality without dramatically increasing its overall size.

These and other objects are achieved by the infusion module and the coffee machine as claimed in the appended claims.

### Summary of Invention

The invention relates to an infusion module, which infusion module includes at least one hopper or container for storing raw material, an infusion group and conveying means for conveying raw material from the hopper or container to the infusion group, as well as piping for leading heated water to said infusion group and for leading the prepared beverage to an outlet spout.

According to a preferred embodiment of the invention, the raw material consists of tea leaves.

Advantageously, tea leaves do not need to be pulverized for being used in the infusion module according to the invention; instead, chopped tea leaves can be used, which enhances the quality of the obtained beverage.

According to an alternative embodiment of the invention, the raw material consists of coffee powder.

Advantageously, according to this embodiment, in case the infusion module is attached to a coffee machine (as described later on)a first kind of coffee-based beverages can be obtained in the brewing group of the coffee machine (i.e. espresso coffee and the like), while a second kind of coffee-based beverages can be obtained in the infusion group of the infusion module of the coffee machine (i.e. drip coffee and the like).

Other raw materials can also be used in the infusion module according to the invention, as will be evident to the person skilled in the art.

The overall structure of the infusion group is almost the same of a brewing group of a conventional coffee machine (namely a fully automatic coffee machine), and said infusion group includes two pistons, at least one of which is movable, so as to open and close the infusion chamber, modify the size of said infusion chamber and possibly compress the raw material (tea leaves, coffee powder, and so on) contained therein.

According to the invention, in order to obtain an infusion from raw material, instead of making heated water simply flow through said raw material, heated water is provided to the infusion chamber of the infusion group and successively remains in the infusion chamber for a predetermined infusion time.

In this way, raw material is soaked in heated water and a high quality for the resulting beverages can be obtained.

To this purpose, according to the present invention, the infusion group is provided with a valve that is arranged upstream to the infusion chamber of the infusion group and is configured to selectively allow or prevent supply of heated water to the infusion chamber of the infusion group, and a threshold volume is set in the infusion chamber so that outflow of the infused beverage from said infusion chamber of said infusion group is prevented if the volume of heated water supplied to the infusion chamber is lower than said threshold volume while it is allowed if said volume of heated water supplied to the infusion chamber exceeds said threshold volume.

The present invention relates to a coffee machine, namely to a fully automatic coffee machine, provided with the above-described infusion module.

The coffee machine, in a per se known manner, comprises an outer casing in which the functional groups necessary for the preparation of a coffee-based beverages are housed.

These groups may include a coffee storing group for storing either coffee powder or coffee beans, a water circulation group, a water heating group, a coffee brewing group and a beverage dispensing group. These groups may further include a coffee grinding group in case coffee is supplied to the machine in the form of coffee beans.

The infusion module can be provided with its own casing, which is connected to the outer casing of the coffee machine, or it can be received in the same outer casing of the coffee machine.

In a preferred embodiment of the invention, the infusion module is provided in the coffee machine in addition to the functional groups for coffee brewing normally provided in a coffee machine.

However, an alternative embodiment can be envisaged in which the infusion module replaces some of or all the functional groups for coffee brewing normally provided in a coffee machine, namely the infusion group of the infusion module replaces the brewing group of the coffee machine.

In this alternative embodiment, the raw material for the infusion module is preferably coffee powder.

Although a separate boiler could be provided for heating water to be supplied to the infusion group, a single boiler is preferably provided for supplying heated water both to the brewing group of the coffee machine and to the infusion group of the infusion module of said coffee machine. This helps to keep the overall size of the coffee machine according to the invention as small as possible.

Although a separate dispensing group could be provided for dispensing infused beverages, a single dispensing group comprising one or more outlet spouts for dispensing coffee-based beverages and one or more outlet spouts for dispensing infused beverages is preferably provided. This further helps to keep the overall size of the coffee machine according to the invention as small as possible.

Although a separate electronic control unit could be provided for controlling the operation of the infusion module, a single control unit is preferably provided and the operation of the infusion module is controlled by the electronic control unit of the coffee machine.

According to a preferred embodiment of the invention, this control unit is programed so as to obtain an infusion cycle which comprises one or more steps of supplying heated water to the infusion group alternated with one or more corresponding soaking steps, in which both further inflow of heated water into the infusion chamber of the infusion group and outflow of the beverage from said infusion chamber of said infusion group are prevented.

Preferably, such infusion cycle comprises several heated water supplying steps alternated with several soaking steps.

According to the invention, the infusion module is provided with means for reversing the direction of the flow of heated water through the infusion chamber of the infusion group.

Thanks to these flow reversing means, the infusion group can be periodically rinsed and cleaned.

This is a particularly important feature, for instance when preparing tea-based beverages, as the tea cake discharged from the infusion group may leave more remains than a coffee cake discharged from the brewing group of the coffee machine.

Moreover, still referring to preparation of tea-based beverages, such feature allows to use, besides untreated tea leaves, also prepared tea leaves (i.e. leaves coated with milk and sugar) in the infusion module of the coffee machine according to the invention.

### Brief Description of Drawings

Further features and advantages of the invention will become more evident from the detailed description of a preferred embodiment thereof, given by way of non-limiting example, with reference to the attached drawings, in which
**Fig.1**

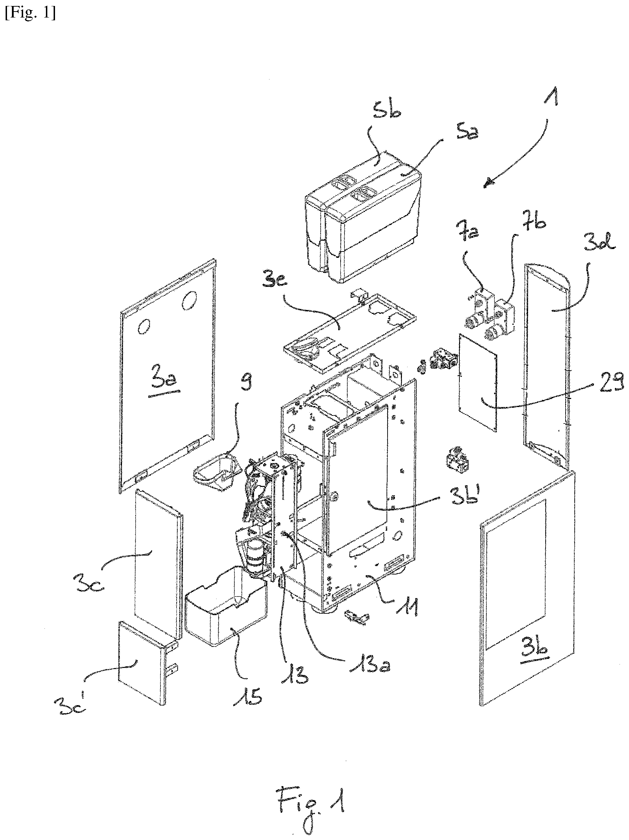

   Figure 1 is a schematic exploded view of an infusion module according to the invention;
**Fig.2**

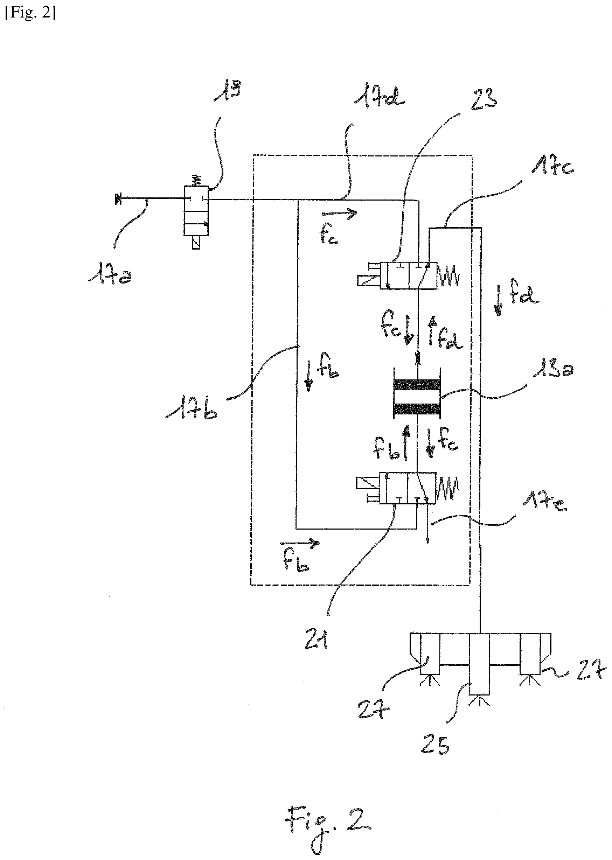

   Figure 2 is a scheme showing the main functional elements of the infusion group of the infusion module of Figure 1;
**Fig.3**

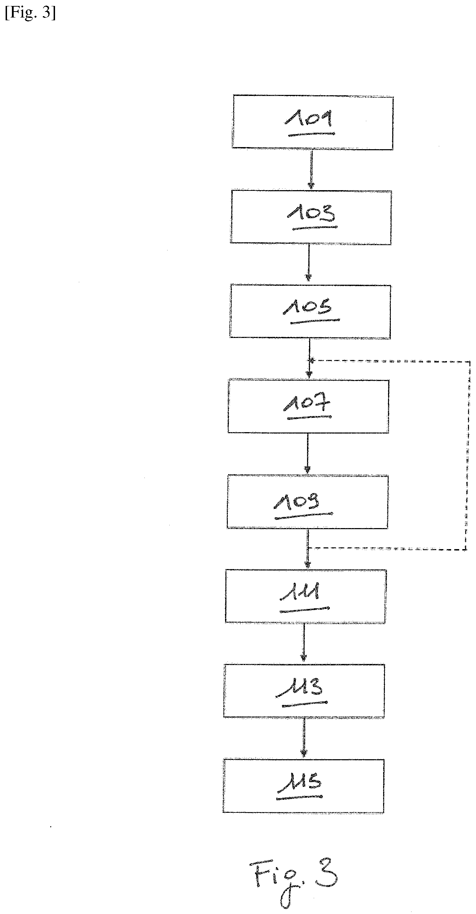

   Figure 3 is a flowchart showing the operation of the infusion group of Figure 2 according to a preferred embodiment of the invention.

### Description of Embodiments

In the following, a preferred embodiment of the invention will be described with reference to preparation of tea-based beverages.

However, this embodiment is not to be intended as limiting and several kinds of raw material other than tea leaves can be used in the infusion module of the invention.

With reference to Figure 1, an infusion module 1 is shown.

The infusion module 1 could be a self-standing module.

However, the infusion module 1 is preferably intended to be associated with a coffee machine, more particularly a fully automatic coffee machine (not shown).

In this preferred arrangement, the infusion module is preferably mechanically, hydraulically and electrically coupled to the coffee machine, so that the overall arrangement is simpler and more compact.

In the shown embodiment, the infusion module 1 comprises an outer casing formed by lateral walls 3a - 3d and by a top wall 3e fastened together. The walls 3a - 3e of the outer casing can be made of any suitable material, for instance steel. One or more of said lateral walls can be provided with doors 3b', 3c', for instance for inspection purposes.

However, if the infusion module is intended to be associated with a coffee machine, it could also be received in the outer casing of the coffee machine.

The infusion module 1 further comprises one or more hoppers 5a, 5b (two in the shown example) containing raw material for the preparation of an infused beverage, namely tea leaves in the described embodiment of the invention.

Preferably, hoppers 5a, 5b contains coarsely chopped tea leaves.

Advantageously, by providing several hoppers it is possible to use different kind of tea leaves, thus obtaining different tea-based beverages.

For example, a first hopper 5a could contain untreated tea leaves, while a second hopper 5b could contain prepared tea leaves, i.e. tea leaves coated with sugar and milk.

Each hopper 5a,5b is provided with an outlet at its bottom side and a motorized screw 7a, 7b is arranged at said hopper outlet for selectively allowing tea leaves to fall down into an underlying funnel 9.

From said funnel 9, the tea leaves further fall into the infusion group 13.

The infusion module could optionally include a grinding group arranged between the hoppers 5a, 5b and the infusion group 13.

This allows to use entire tea leaves or coffee beans or the like as raw material.

The infusion group 13 is received in an inner casing 11 and it has the same general structure of a conventional brewing group of a fully automatic coffee machine, so that it will not be disclosed in detail herein.

In short, the infusion group 13 comprises an infusion chamber 13a delimited by two pistons, at least one of which is movable, so that the infusion chamber can be closed opened or closed and the size of said infusion chamber can be varied and the tea leaves contained therein can be compressed.

Beneath the infusion group 13, a receptacle 15 for exhausted material (i.e. tea cakes) is provided.

As mentioned above, according to the invention infused beverages are not prepared by simply letting a flow of heated water pass through the infusion chamber, as in known fully automatic machines.

Instead, tea leaves are allowed to soak in heated water, so as to obtain an actual infusion.

The structure of the hydraulic circuit of the infusion module 1 of the invention allowing to achieve such result is schematically shown in Figure 2.

Although the infusion module could be provided with its own boiler for heating water, preferably a single boiler is provided for supplying heated water both to the brewing group of the coffee machine and to the infusion group 13 of the infusion module 1.

Accordingly, the hydraulic circuit of the infusion module 1 includes a first pipe 17a connecting the boiler of the coffee machine to the infusion module. In the preferred embodiment shown in Figure 2, the first pipe 17a is branched, for reasons that will be explained in detail below.

A first branch consists in a second pipe 17b which leads to the inlet of the infusion chamber 13a of the infusion group 13 so as to put the boiler of the coffee machine in fluid communication with the infusion chamber 13a of the infusion group 13.

A third pipe 17c connects the outlet of the infusion chamber of the infusion group 13 to a infusion outlet spout 25 for dispensing the tea-based beverage prepared in the infusion module 1 into a cup or similar container.

Although the infusion outlet spout 25 could be provided in a separate dispensing unit of the infusion module 1, preferably a single dispensing unit is provided for both the infusion outlet spout 25 and one or more coffee outlet spouts 27. This helps to make the overall construction of the coffee machine simpler and more compact.

According to the invention, a shut-off valve 19 is provided along said first pipe 17a for selectively allowing heated water to flow from the boiler of the coffee machine to the infusion module 1, namely to the infusion chamber 13a of the infusion group 13 of the infusion module.

Furthermore, according to the invention, a threshold volume is set in the infusion chamber 13a so that outflow of the infused beverage from said infusion chamber 13a of said infusion group 13 is prevented if the volume of heated water supplied to the infusion chamber is lower than said threshold volume while it is allowed if said volume of heated water supplied to the infusion chamber exceeds said threshold volume.

Thanks to this arrangement, heated water can be admitted to the infusion chamber 13a of the infusion group 13 containing the tea leaves and prevented to flow out therefrom. Thus, the tea leaves can soak in heated water and a true infusion is obtained.

This allows to optimize extraction of flavor from tea leaves and strongly enhances the quality of the resulting tea-based beverages.

In order to periodically clean the infusion chamber 13a of the infusion group 13 from remains of the tea cakes, the preferred embodiment of the invention shown in Figure 2 further provides for means for reversing the flow of water through said infusion chamber of said infusion group.

As mentioned above, the first pipe 17a of the hydraulic circuit of the infusion module 1 is branched and the second branch consists of a fourth pipe 17d connecting the first pipe 17a to the outlet of the infusion chamber 13a of the infusion group 13.

A fifth pipe 17e is further provided for connecting the inlet of the infusion chamber 13a of the infusion group 13 to a drain.

A first valve 21 is provided along the second pipe 17b, upstream to the inlet of the infusion chamber 13a of the infusion module 13, which first valve 21 can be switched in an active or inactive state for selectively allowing heated water to enter the infusion chamber 13a of the infusion group 13 through the inlet of said infusion chamber.

Moreover, a second valve 23 is provided along said fourth pipe 17d,downstream to the outlet of the infusion chamber 13a of the infusion module 13, which second valve 23 can be switched in an active or inactive state for selectively allowing heated water to enter the infusion chamber 13a of the infusion group 13 through the outlet of said infusion chamber.

During preparation of tea, flow through the fourth pipe 17d is prevented and flow through the second pipe 17b is allowed, so that heated water flows from the boiler to the inlet of the infusion chamber of the infusion group and the resulting tea-based beverage then flows through the third pipe 17c to the infusion outlet spout 25.

On the other hand, when cleaning of the infusion group 13 is required, flow through the second pipe 17b is prevented and flow through the fourth pipe 17d is allowed, so that heated water flows from the boiler to the outlet of the infusion chamber of the infusion group, it passes through said infusion chamber in a reverse direction and a flow of water carrying tea leaves remains then flows through the fifth pipe 17e to the drain.

The shut-off valve 19 and the first and second valves 21, 23, as well as the motorized screws 19a, 19b are controlled by an electronic control unit.

The infusion module can be provided with its own electronic control unit 29 (see Figure 1).

As an alternative, when the infusion module is attached to a coffee machine, the coffee machine could be provided with a single electronic control unit for controlling both the components of the brewing group of the coffee machine and the components of the infusion group of the infusion module.

In this latter case, the infusion module is preferably controlled by the coffee machine by using a serial bus.

The infusion module can be provided with its own user interface, allowing the user to trigger the preparation of the beverage, for instance by pushing a button (in case a single kind of beverage can be prepared by the module) or to select the kind of beverage to be prepared, for instance by pushing a corresponding button (in case several kinds of beverages can be prepared by the module).

As an alternative, when the infusion module is attached to a coffee machine, a single user interface could be provided in the coffee machine for the selection of both the coffee-based beverages and the infused beverages.

It will be evident to the person skilled in the art that high quality infused beverages can be obtained by the infusion module of the coffee machine according to the invention, the operation of which is summarized here below with reference to Figure 3.

At step 101, through the user interface, the user triggers the preparation of a tea-based beverage, possibly selecting a specific tea-based beverage if the infusion module 1 is able to prepare several kinds of beverages, as in the shown preferred embodiment.

At step 103, according to the user's selection, tea leaves are transferred from the respective hopper 5a, 5b to the infusion group 13.

In this step, the motorized screw 7a, 7b below the hopper containing the kind of tea leaves provided in the recipe of the beverage chosen by the user is driven, thus allowing a predetermined amount of tea leaves to fall into the funnel 9 and then into the infusion group 13.

At step 105, the pistons of the infusion chamber of the infusion group are moved into a configuration suitable for tea infusion.

Preferably, in such configuration tea leaves contained in the infusion chamber 13a of the tea infusion group 13 are uncompressed or mildly compressed. This will allow tea leaves to slightly float and expand in the heated water during the subsequent steps, thus promoting tea infusion.

At step 107, a predetermined amount of heated water is allowed into the infusion chamber 13a of the infusion group 13.

In this step, the shut-off valve 19 is active, the first valve 21 is active and connects the second pipe 17b to the inlet of the infusion chamber 13a of the infusion group 13 (see also arrows fb in Figure 2) and the second valve 23 is inactive.

In this step, the amount of heated water supplied to the infusion chamber 13a is not sufficient for reaching the threshold volume set in the infusion chamber, so that outflow from said infusion chamber of said infusion group is prevented.

At step 109, tea leaves are allowed to soak in heated water for a predetermined time.

In this step, the shut-off valve 19 is inactive, the first valve 21 is active and connects the second pipe 17b to the inlet of the infusion chamber 13a of the infusion group 13 and the second valve 23 is inactive.

According to the beverage recipe, these heated water supplying step and subsequent soaking step can be carried out once, or they can be iteratively repeated several times, as indicated by the arrow in broken line in Figure 3.

By way of example, the preparation of a tea-based beverage could comprise:
- a first heated water supplying step, in which a first amount of heated water is allowed into the infusion chamber; usually, such first amount of water (e.g. 35 ml) is sufficient for wetting the tea leaves;
- a first soaking step, in which tea leaves soak in heated water for a first amount of time (e.g. 20 seconds);
- a second heated water supplying step, in which a second amount of heated water is allowed into the infusion chamber; said second amount of water replaces at least the water absorbed by the tea leaves, but usually is higher than that and higher than the first amount of water (e.g. 90 ml);
- a second soaking step, in which tea leaves soak in heated water for a second amount of time (e.g. 20 seconds);
and so on.

At step 111, when the number of iterations of water supplying steps and soaking steps provided in the recipe of the selected beverage is achieved, a further amount of heated water is supplied to the infusion chamber, so that the threshold volume set in the infusion chamber is reached and exceeded.

As a result, the beverage is delivered through the infusion outlet spouts through the third pipe 17c (see also arrows fd in Figure 2).

At step 113, the flow of water through the infusion group is reversed for cleaning purposes.

In this step, the shut-off valve 19 is active, the second valve 23 is active and connects the boiler to the outlet of the infusion chamber 13a of the infusion group 13 through the fourth pipe 17d and the first valve 21 is inactive and the inlet of the infusion chamber 13a of the infusion group 13 is connected to the drain (see also arrows fc in Figure 2).

Such cleaning step could be carried out either at the end of each infusion cycle or after a programmed time after the last infusion cycle or after a predetermined number of infusion cycles.

At step 115, the pistons of the infusion group 13 are driven for strongly compress the tea leaves contained therein and the resulting tea cake is thrown away.

The parameters of the recipes of each tea-based beverage that can be prepared by the infusion module 1, including for instance kind and weight of tea leaves to be used, number of iteration of water supplying steps and soaking steps, amount of water admitted into the infusion chamber for each water supplying step, dwelling time for each soaking step, can be stored in the memory of the infusion module control unit (if provided) or of the coffee machine control unit, or they can be stored in a separate memory and then uploaded to the aforesaid control unit(s).

It will be evident to the person skilled in the art that the foregoing detailed description of a preferred embodiment has been given by way of non-limiting example and several variants and modifications within the reach of the person skilled in the art can be envisaged without departing from the scope of protection as defined by the appended claims.

For instance, as mentioned above, raw materials other than tea leaves (including coffee powder) can be used for obtaining an infused beverage.

## Claims

1. Infusion module (1) for preparing infused beverages, which infusion module includes at least one hopper or container (5a, 5b) for storing a raw material for an infused beverage, an infusion group (13) comprising an infusion chamber (13a), and conveying means (9a, 9b) for conveying said raw material from said hopper or container to said infusion group, as well as piping (17a - 17c) for leading heated water to said infusion group and for leading the infused beverage to an infusion outlet spout (25), wherein a shut-off valve (19) is arranged upstream to the inlet said infusion chamber, for selectively allowing or preventing inflow of heated water into said infusion chamber (13a) and wherein a threshold volume is set in said infusion chamber (13a) so that outflow of the infused beverage from said infusion chamber is prevented if the volume of heated water supplied to said infusion chamber is lower than said threshold volume while it is allowed if the volume of heated water supplied to said infusion chamber exceeds said threshold volume, **characterized in that** said infusion module (1) is provided with means for reversing the direction of flow of heated water through said infusion chamber (13a).

2. Infusion module (1) according to claim 1, wherein said infusion module comprises a first pipe (17a) for connecting a source of heated water to the infusion module (1), a second pipe (17b) for connecting said first pipe (17a) to the inlet of said infusion chamber (13a) and a third pipe (17c) for connecting the outlet of said infusion chamber (13a) to said infusion outlet spout (25) and wherein said shut-off valve (19) is arranged along said first pipe (19a) or said second pipe (17b), upstream to the inlet of said infusion chamber.

3. Infusion module (1) according to claim 1, wherein said infusion module (1) comprises a fourth pipe (17d) for connecting said first pipe (17a) to the outlet of said infusion chamber (13a) and a fifth pipe (17c) for connecting the inlet of said infusion chamber (13a) to a drain.

4. Infusion module (1) according to claim 3, wherein said infusion module comprises a first valve (21), arranged along said second pipe (17b) for selectively allowing or preventing inflow of heated water into said infusion chamber (13a) through the inlet of said infusion chamber and with a second valve (23), arranged along said fourth pipe (17d) for selectively allowing or preventing inflow of heated water into said infusion chamber (13a) through the outlet of said infusion chamber.

5. Infusion module (1) according to any of the preceding claims, wherein said infusion module is further provided with a grinding group arranged between one or more hoppers or containers (5a, 5b) and said infusion group (13).

6. Infusion module (1) according to any of the claims 1 - 5, wherein said raw material consists of tea leaves.

7. Infusion module (1) according to any of claims 1-5, wherein said raw material consists of coffee powder or coffee beans.

8. Coffee machine, more particularly fully automatic coffee machine, of the kind comprising a coffee storing group, a water circulation group, a water heating group, a coffee brewing group and a coffee-based beverage dispensing group, **characterized in that** it is equipped with an infusion module (1) according to any of the claims 1-7.

9. Coffee machine according to claim 8, wherein said heating water group of the coffee machine comprises a boiler and wherein the source of heated water for the infusion group (13) is said boiler of said coffee machine.

10. Coffee machine according to claim 8 or 9, wherein said coffee machine comprises an electronic control unit and wherein said infusion module (1) is controlled by said electronic control unit of said coffee machine.

11. Coffee machine according to claim 10, wherein said infusion module (1) is connected to said coffee machine by a serial bus.

12. Method for operating an infusion module according to any of the claims 1 - 7 comprising:
- a step (101) of selecting an infused beverage and triggering the preparation of said beverage;
- a step (103) of transferring raw material from said hopper or container (5a, 5b) to said infusion chamber (13a) of said infusion group (13);
- a step (107) of supplying a predetermined amount of heated water into said infusion chamber (13) of said infusion group (13), while outflow from said infusion camber (13a) is prevented;
- a step (109) of letting said raw material soak in heated water for a predetermined amount of time;
- a step (111) of dispensing the thus obtained beverage from said infusion chamber (13a) of said infusion group (13) to said outlet spout (25),
**characterized in that** it further comprises the step (115) of reversing the flow of water through said infusion chamber (13a) of said infusion group (13) and discharging said reverse flow of water to a drain.

13. Method according to claim 12, wherein said step (107) of supplying a predetermined amount of heated water into said infusion chamber (13) of said infusion group (13), while outflow from said infusion chamber (13a) is prevented, and said step (109) of letting said raw material soak in heated water for a predetermined amount of time are iteratively repeated several times.

## Patentansprüche

1. Infusionsmodul (1) zur Zubereitung von aufgebrühten Getränken, wobei das Infusionsmodul wenigstens einen Trichter oder Behälter (5a, 5b) zum Lagern von Rohmaterial für ein aufgebrühtes Getränk, eine Brühgruppe (13) mit einer Brühkammer (13a) und Fördermittel (9a, 9b) zum Fördern des Rohmaterials von dem Trichter oder Behälter zu der Brühgruppe sowie Leitungen (17a - 17c), um erhitztes Wasser der Brühgruppe zuzuführen und um das aufgebrühte Getränk einer Auslasstülle (25) zuzuführen, aufweist, wobei ein Absperrventil (19) stromaufwärts von dem Einlass der Brühkammer angeordnet ist, um selektiv Einlass von erhitztem Wasser in die Brühkammer (13a) zu ermöglichen oder zu verhindern, und wobei eine Volumenschwelle in der Brühkammer (13a) eingestellt ist, so dass Ausfluss von aufgebrühtem Getränk aus der Brühkammer verhindert ist, wenn das Volumen erhitzten Wassers, das in die Brühkammer eingeleitet wurde, kleiner als die Volumenschwelle ist, während Ausfluss ermöglicht ist, wenn das Volumen des erhitzten Wassers, das in die Brühkammer eingeleitet wurde, die Volumenschwelle übersteigt, **dadurch gekennzeichnet, dass** das Infusionsmodul (1) mit Mitteln zum Umkehren der Strömungsrichtung des erhitzten Wassers durch die Brühkammer (13a) versehen ist.

2. Infusionsmodul (1) nach Anspruch 1, wobei das Infusionsmodul eine erste Leitung (17a) zum Anschließen einer Quelle erhitzten Wassers an das Infusionsmodul (1), eine zweite Leitung (17b) zum Anschließen der ersten Leitung (17a) an den Einlass der Brühkammer (13a) und eine dritte Leitung (17c) zum Anschließen des Auslasses der Brühkammer (13a) an die Brühauslasstülle (25) aufweist, und wobei das Absperrventil (19) in der ersten Leitung (19a) oder der zweiten Leitung (17b) stromaufwärts von dem Einlass der Brühkammer angeordnet ist.

3. Infusionsmodul (1) nach Anspruch 1, wobei das Infusionsmodul (1) eine vierte Leitung (17d) zum Anschließen der ersten Leitung (17a) an den Auslass der Brühkammer (13a) und eine fünfte Leitung (17c) zum Anschließen des Auslasses der Brühkammer (13a) an einen Abfluss aufweist.

4. Infusionsmodul (1) nach Anspruch 3, wobei das Infusionsmodul ein erstes Ventil (21) aufweist, das in der zweiten Leitung (17b) angeordnet ist, um selektiv den Einlass von erhitztem Wasser in die Brühkammer (13a) durch den Einlass der Brühkammer zu erlauben oder zu verhindern, und mit einem zweiten Ventil (23), das in der vierten Leitung (17d) angeordnet ist, um selektiv Einlass von erhitztem Wasser in die Brühkammer (13a) durch den Auslass der Brühkammer zu ermöglichen oder zu verhindern.

5. Infusionsmodul (1) nach einem der vorstehenden Ansprüche, wobei das Infusionsmodul zudem mit einer Mahlgruppe versehen ist, die zwischen einem oder mehreren Trichtern oder Behältern (5a, 5b) und der Brühgruppe (13) angeordnet ist.

6. Infusionsmodul (1) nach einem der Ansprüche 1 bis 5, wobei das Rohmaterial aus Teeblättern besteht.

7. Infusionsmodul (1) nach einem der Ansprüche 1 bis 5, wobei das Rohmaterial aus Kaffeepulver oder Kaffeebohnen besteht.

8. Kaffeemaschine, insbesondere vollautomatische Kaffeemaschine, einer Art, die eine Kaffeelagergruppe, eine Wasserzirkulationsgruppe, eine Wasseraufheizgruppe, eine Kaffeebrühgruppe und eine Ausgabegruppe für Getränke auf Kaffeebasis aufweist, **dadurch gekennzeichnet, dass** sie mit einem Infusionsmodul (1) nach einem der Ansprüche 1 bis 7 versehen ist.

9. Kaffeemaschine nach Anspruch 8, wobei die Wasseraufheizgruppe der Kaffeemaschine einen Boiler enthält und wobei die Quelle erhitzten Wassers der Brühgruppe (13) der Boiler der Kaffeemaschine ist.

10. Kaffeemaschine nach Anspruch 8 oder 9, wobei die Kaffeemaschine eine elektrische Steuereinheit enthält und wobei das Infusionsmodul von der elektronischen Steuereinheit der Kaffeemaschine gesteuert wird.

11. Kaffeemaschine nach Anspruch 10, wobei das Infusionsmodul (1) an die Kaffeemaschine über einen seriellen Bus angeschlossen ist.

12. Verfahren zum Betreiben eines Infusionsmoduls nach einem der Ansprüche 1 bis 7 mit:
- einem Schritt (101) des Auswählens eines Brühgetränks und Auslösens der Zubereitung des Getränks,
- einem Schritt (103) des Transportierens von Rohmaterial von dem Trichter oder Behälter (5a, 5b) in die Brühkammer (13a) der Brühgruppe (13),
- einem Schritt (107) des Einleitens einer vorgegebenen Menge erhitzten Wassers in die Brühkammer (13) der Brühgruppe (13), während Ausfluss aus der Brühkammer (13a) verhindert wird,
- einen Schritt (109) des Ziehenlassens des Rohmaterials in erhitztem Wasser für eine vorgegebene Zeitspanne
- einem Schritt (111) des Ausgebens des so erhaltenen Getränks von der Brühkammer (13a) der Brühgruppe (13) durch der Auslasstülle (25),
**dadurch gekennzeichnet, dass** es zusätzlich den Schritt (115) des Umkehrens der Wasserströmung durch die Brühkammer (13a) der Brühgruppe (13) und des Abgebens der umgekehrten Wasserströmung an einen Abfluss aufweist.

13. Verfahren nach Anspruch 12, wobei der Schritt (107) des Einleitens einer vorgegebenen Menge erhitzten Wassers in die Brühkammer (13) der Brühgruppe (13), während Ausfluss aus der Brühkammer (13a) verhindert wird, und der Schritt (109) des Ziehenlassens des Rohmaterials in erhitztem Wasser für eine vorgegebene Zeitspanne iterativ mehrmals wiederholt werden.

## Revendications

1. - Module d'infusion (1) pour préparer des boissons infusées, lequel module d'infusion comprend au moins une trémie ou récipient (5a, 5b) pour stocker une matière première pour une boisson infusée, un groupe d'infusion (13) comprenant une chambre d'infusion (13a), et des moyens de transport (9a, 9b) pour transporter ladite matière première de ladite trémie ou dudit récipient jusqu'audit groupe d'infusion, ainsi qu'une tuyauterie (17a-17c) pour acheminer de l'eau chauffée jusqu'audit groupe d'infusion et pour acheminer la boisson infusée jusqu'à un bec de sortie d'infusion (25), une vanne d'arrêt (19) étant disposée en amont de l'entrée de ladite chambre d'infusion, pour permettre ou empêcher de manière sélective l'entrée d'eau chauffée dans ladite chambre d'infusion (13a), et un volume de seuil étant défini dans ladite chambre d'infusion (13a) de telle sorte que la sortie de la boisson infusée de ladite chambre d'infusion est empêchée si le volume d'eau chauffée fourni à ladite chambre d'infusion est inférieur audit volume de seuil tandis qu'elle est autorisée si le volume d'eau chauffée fourni à ladite chambre d'infusion dépasse ledit volume de seuil, **caractérisé par le fait que** ledit module d'infusion (1) comporte des moyens pour inverser la direction d'écoulement de l'eau chauffée à travers ladite chambre d'infusion (13a) .

2. - Module d'infusion (1) selon la revendication 1, ledit module d'infusion comprenant un premier tuyau (17a) pour relier une source d'eau chauffée au module d'infusion (1), un deuxième tuyau (17b) pour relier ledit premier tuyau (17a) à l'entrée de ladite chambre d'infusion (13a), et un troisième tuyau (17c) pour relier la sortie de ladite chambre d'infusion (13a) audit bec de sortie d'infusion (25), et ladite vanne d'arrêt (19) étant disposée le long dudit premier tuyau (19a) ou dudit deuxième tuyau (17b), en amont de l'entrée de ladite chambre d'infusion.

3. - Module d'infusion (1) selon la revendication 1, ledit module d'infusion (1) comprenant un quatrième tuyau (17d) pour relier ledit premier tuyau (17a) à la sortie de ladite chambre d'infusion (13a), et un cinquième tuyau (17c) pour relier l'entrée de ladite chambre d'infusion (13a) à un drain.

4. - Module d'infusion (1) selon la revendication 3, ledit module d'infusion comprenant une première vanne (21), disposée le long dudit deuxième tuyau (17b) pour permettre ou empêcher de manière sélective l'entrée d'eau chauffée dans ladite chambre d'infusion (13a) à travers l'entrée de ladite chambre d'infusion, et une seconde vanne (23) disposée le long dudit quatrième tuyau (17d) pour permettre ou empêcher de manière sélective l'entrée d'eau chauffée dans ladite chambre d'infusion (13a) à travers la sortie de ladite chambre d'infusion.

5. - Module d'infusion (1) selon l'une quelconque des revendications précédentes, ledit module d'infusion comportant en outre un groupe de mouture disposé entre une ou plusieurs trémies ou récipients (5a, 5b) et ledit groupe d'infusion (13).

6. - Module d'infusion (1) selon l'une quelconque des revendications 1 à 5, dans lequel la matière première est constituée de feuilles de thé.

7. - Module d'infusion (1) selon l'une quelconque des revendications 1 à 5, dans lequel la matière première est constituée de poudre de café ou de grains de café.

8. - Machine à café, plus particulièrement machine à café entièrement automatique, du type comprenant un groupe de stockage de café, un groupe de circulation d'eau, un groupe de chauffage d'eau, un groupe de préparation de café et un groupe de distribution de boisson à base de café, **caractérisée par le fait qu'**elle est équipée d'un module d'infusion (1) selon l'une quelconque des revendications 1 à 7.

9. - Machine à café selon la revendication 8, dans laquelle ledit groupe de chauffage d'eau de la machine à café comprend un chauffe-eau et dans laquelle la source d'eau chauffée pour le groupe d'infusion (13) est ledit chauffe-eau de ladite machine à café.

10. - Machine à café selon la revendication 8 ou 9, ladite machine à café comprenant une unité de commande électronique et ledit module d'infusion (1) étant commandé par ladite unité de commande électronique de ladite machine à café.

11. - Machine à café selon la revendication 10, dans laquelle ledit module d'infusion (1) est connecté à ladite machine à café par un bus série.

12. - Procédé de fonctionnement d'un module d'infusion selon l'une quelconque des revendications 1 à 7, comprenant :
- une étape (101) consistant à sélectionner une boisson infusée et déclencher la préparation de ladite boisson ;
- une étape (103) consistant à transférer de la matière première de ladite trémie ou dudit récipient (5a, 5b) jusqu'à ladite chambre d'infusion (13a) dudit groupe d'infusion (13) ;
- une étape (107) consistant à fournir une quantité prédéterminée d'eau chauffée dans ladite chambre d'infusion (13) dudit groupe d'infusion (13), tout en empêchant la sortie de ladite chambre d'infusion (13a) ;
- une étape (109) consistant à laisser tremper ladite matière première dans l'eau chauffée pendant une durée prédéterminée ;
- une étape (111) consistant à distribuer la boisson ainsi obtenue de ladite chambre d'infusion (13a) dudit groupe d'infusion (13) jusqu'audit bec de sortie (25),
**caractérisé par le fait qu'**il comprend en outre l'étape (115) consistant à inverser l'écoulement d'eau à travers ladite chambre d'infusion (13a) dudit groupe d'infusion (13) et à évacuer ledit écoulement d'eau inversé jusqu'à un drain.

13. - Procédé selon la revendication 12, dans lequel ladite étape (107) consistant à fournir une quantité prédéterminée d'eau chauffée dans ladite chambre d'infusion (13) dudit groupe d'infusion (13), tout en empêchant la sortie de ladite chambre d'infusion (13a), et ladite étape (109) consistant à laisser tremper ladite matière première dans l'eau chauffée pendant une durée prédéterminée sont répétées de manière itérative plusieurs fois.
